# EUROPEAN PATENT SPECIFICATION

(11) **EP 0 490 031 B1**
(45) Date of publication and mention of the grant of the patent: **25.11.1998**
(21) Application number: 91116020.8
(22) Date of filing: 20.09.1991
(51) Int. Cl.: A01N 57/12, A01N 25/32

(54) **Method for protecting crops while eliminating crop injury due to pesticide interactions.**
Verfahren zum Pflanzenschutz unter Ausschluss von Pflanzenschädigungen durch Pestizid-Wechselwirkungen
Methode de protection des cultures évivant les dégats dus à des interactions des pesticides.

(30) Priority: 14.12.1990 US 624892
(43) Date of publication of application: 17.06.1992
(73) Proprietor: AMERICAN CYANAMID COMPANY, Wayne, NJ 07470-8426 (US)
(72) Inventor: Milionis, Jerry Peter, Somerset, New Jersey 08873 (US); Behm, James Arthur, Hamilton Turp, New Jersey 08610 (US)
(74) Representative: Wächtershäuser, Günter, Prof. Dr.

(56) References cited:
- EP-A- 0 111 112
- EP-A- 0 268 926
- GB-A- 2 188 651
- CHEMICAL ABSTRACTS, vol. 93, no. 1, 1979, Columbus, Ohio, US; abstract no. 2239D, MONOSTORY ET AL.: 'Use of fugran carrier for pesticide granules'

## Description

The present invention relates to a method for protecting crops from attack by insects and nematodes while inhibiting the growth of undesirable plant species in the presence of said crops and reducing or eliminating crop injury due to interaction in the plant between terbufos, the insecticide-nematicide, and an AHAS inhibiting herbicide.

### Background of the Invention

Monostory et al., Nehézvegyip. Kut. Intéz. Közl. 1979, 8, 57-64 discloses granulated plant protectors comprising a pesticide and a cellulose-rich by-product of furfurol manufacture.

For the past four decades farmers have employed soil insecticides and nematicides for the protection of their crops and control of soil borne pests in the locus thereof. Many of these insecticides and nematioides have LD₅₀'s at or below 50 mg/kg of animal body weight and are extremely toxic to mammals, including humans, when introduced into the circulatory systems thereof whether by dermal absorption, inhalation or ingestion. As such, it has been long recognized that extreme care must be taken when handling these toxic materials, as for example during the manufacture, packaging, transportation, distribution or the application thereof to the soil in the locus of the crops sought to be protected.

Two examples of soil insecticides that were developed nearly forty years ago and are still in as great demand today as they were in earlier years, are terbufos and phorate.

Technical grade terbufos is reported in the Eight Edition of the Pesticide manual published by The British Crop Protection Council, to have an acute percutaneous LD₅₀ on rabbits of 1.0 mg/kg of animal body weight. Phorate is reported to have an acute percutaneous LD₅₀ on rats of 2.5-6.2 mg/kg of animal body weight.

Thus it is not surprising to find that during these past four decades the agricultural industry has sponsored an extensive research effort to find methods of reducing the oral and dermal toxicities of these extremely toxic insecticide-nematicides.

It has been found that when terbufos or phorate formulations are prepared on pumice or other abrasive carriers the applicators used for distribution of the formulated product are subject to severe wear and rapid erosion. Such erosion is costly and is a very significant problem especially in under developed and economically stressed countries.

In addition to the above-said difficulties encountered in the preparation of terbufos and phorate formulations having reduced dermal toxicity, it is now evident that the high grade minerals from naturally occurring deposits which have been previously employed as carriers for insecticides and nematicides are being depleted. Thus, the quality of the carriers available today is beginning to deteriorate and with such deterioration formulators are encountering problems in (1) maintaining pesticide levels in the formulated products, (2) retaining effectiveness of the products in the field and (3) maintaining the LD₅₀ levels once established for the formulated products.

It is therefore an object of the present invention to provide a method for protecting crops by applying a new granulated pesticidal formulation composition having reduced mammalian dermal toxicity and comprising a solid inert granular, biodegradable, sorptive carrier obtained from a renewable resource and an insecticidally and nematicidally effective amount of O,O-diethyl S-{[(1,1-dimethylethyl)thio]methyl)phosphorodithioate and thereafter a herbicidally effective amount of an AHAS inhibiting herbicide.

It is also an object of this invention to provide a method for protecting crops, comprising the application of a particulate pesticide composition with concomitant reduced mammalian dermal toxicity, comprising; an inert granular carrier prepared from a cellulosic complex and having a uniform quality, particle size, shape, bulk density, absorption capacity and pH, and having absorbed therein an insecticidally-nematicidally effective amount of terbufos. and thereafter the application of an AHAS inhibiting herbicide. The cellulosic carriers used in the formulation of this invention are also essentially non-dusting and non-abrasive, but readily decompose in or on the soil in the presence of soil and moisture.

### SUMMARY OF THE INVENTION

This invention applies new granulated insecticidal-nematicidal compositions with reduced mammalian dermal toxicities, comprising; an inert granular, biodegradable, sorptive carrier of renewable resource material and an insecticidally and nematicidally effective amount of O,O-diethyl S-{[(1,1-dimethylethyl)thio]methyl}phosphorodithioate, (Terbufos).

Specifically, the present invention relates to a method for protecting crops from attack by insects and nematodes while inhibiting the growth of undesirable plant species in the presence of said crops and reducing or eliminating crop injury due to interaction in the plant between terbufos, the insecticide-nematicide, and the AHAS inhibiting herbicide comprising; applying to soil in the locus of said crops, at or about the time of planting, an insecticidally-nematicidally effective amount of a cellulosic granular composition at least 90% of which is -8 +20 mesh granules having a bulk density of from 561 kg/m³ (35 lbs/cft) to 722 kg/m³ (45,0 lbs/cft) and a pH value between pH6 and pH8 said cellulosic composition being selected from the group of cellulosic material derived from deinked paper, deinked recycled paper, waste sulfate pulp or primary sludge from paper manufacture, wood fiber, primary wood pulp, secondary wood pulp or sludge from wood processing and absorbed therein from 5.0% to 15% by weight of terbufos and thereafter applying to the locus of the above-said terbufos treated crops approximately 2 to 4 weeks after planting and after said crops have emerged, a herbicidally effective amount of an AHAS inhibiting herbicide.

The renewable resource material is a cellulosic material preferably obtained as deinked paper, recycled or otherwise, or as waste material from paper manufacture such as sulfate, sulfate pulp or primary paper sludge. Other cellulosic materials that may be employed as the renewable resource material from which the sorptive granular carriers can be prepared for use in the compositions of this invention are wood fiber from trees and primary and secondary wood pulp or sludge.

Granular carriers that are especially useful in the preparation of the reduced dermal terbufos and phorate compositions of this invention generally have a bulk density of from 35 to 45 lbs/cft. They have a pH value between pH 6.0 and pH 8.0, contain from about 2.0% to 5.0% moisture, have a particle size in which at least about 90% by weight of the granules are -8, +20 mesh, based upon U.S. Standard sieve sizes. They are comprised of about 37% to 60% by weight of fiber and contain about 63% to 40% by weight of fillers normally used in the manufacture of paper such as kaolin, barium sulfate, titanium dioxide and the like.

The granules that are used in the preparation of the compositions of this invention are distinguished from other granules heretofore employed as carriers for terbufos by reason of the fact that the above-said granules provide finished, free-flowing, non-abrasive granular compositions having significantly reduced mammalian dermal toxicities and provide slow release of the pesticide contained therein. The granules themselves can be prepared by the methods of manufacture described by H. E. Lowe et al in their UK patent GB 2188651B, application No. 8705107.4 filed March 5, 1987. However, it should be noted that the patentees describe the preparation of such a broad class of granular compositions by their processes that many of the granular compositions prepared by the patentees are not entirely satisfactory for use in the preparation of the compositions of the present invention.

Only those granular compositions having the physical and chemical characteristics described above appear to provide the significantly improved mammalian dermal toxicities and controlled release rates of terbufos or phorate so vehemently sought after during the past four decades of research in the field of crop protection products.

In accordance with this invention, compositions containing from about 2.0% to 20% by weight of terbufos can be prepared by spraying a fluidized or tumbling bed of dry particulated cellulosic material with about 2.0% to 20.0% by weight of technical grade terbufos or phorate. The particle size of the cellulosic granules is generally at least about 90% by weight of -8 mesh +20 mesh particle size and comprises about 75% to 98% by weight of the finished terbufos cellulosic particulate product. In practice, controlled particle size ranges of 8/20, 10/14, 12/20, or 12/24 mesh material are frequently used.

Spraying of the cellulosic particles is continued for about 10 to 30 minutes, after which the sprayed granules are tumbled or blended for an additional 10 to 60 minutes and preferably 20 to 60 minutes to allow the terbufos to be uniformly distributed throughout the particulate mass and well absorbed into each granule.

Where desired from about 2.0% to 7.0% by weight of vegetable oil or mineral oil may be applied as a liquid spray to the terbufos or phorate impregnated granules. However, unlike conventional terbufos granules prepared with montmorillonite, Mexican ROB (aluminum silicate), European Diaperl S-1 or the like, where the LD₅₀ of the pesticide granules have heretofore, been further improved by the addition of small amount of oil, with the compositions of the present invention addition of a small amount of vegetable or mineral oil is tolerable but generally tends to increase the dermal toxicity of the terbufos granules rather than reduce the dermal toxicity thereof.

A biocide may also be applied to the above-said granules to inhibit bacterial proliferation and the thus prepared granules may be dried using any convenient means, such as a fluid bed drier, belt dryer or the like.

In addition to the above-said procedures for preparing terbufos cellulosic granular compositions with markedly reduced mammalian dermal toxicity, it is also found that further improvement in the mammalian dermal toxicity can be obtained by coating or partially coating the terbufos granules, with about 1.0% to 10.0% by weight of a natural or synthetic resin or polymer such as shellac, lacquer, or an acrylic polymer, polyvinyl acetate (PVA) or a polyvinyl chloride (PVC) resin or polyvinyl chloride/vinyl ester copolymer or homopolymer having a weight average molecular weight of about 200,000 to 400,000 and an inherent viscosity, as determined by ASTMD 1243, of about 1.00 to 1.32. For example, the PVC coating composition is prepared by admixing said PVC resin with about 5.0% to 15.0%, by weight, of a plasticizing agent such as butyl benzyl phthalate, diisononyl phthalate, dibutyl phthalate, di-2-ethylhexyl phthalate, tricresyl phosphate and trioctyl phosphate; about 0.3% to 2.0%, by weight, of a heat stabilizing agent for the resin, such as an organotin stabilizer, organo barium stabilizer, zinc/calcium stearate, epoxidized soybean oil, dibasic lead phosphite or the like; and about 0.5% to 2.0%, by weight, of a surface active agent, such as a nonionic surfactant.

Nonionic surfactants useful in these PVC coating compositions include nonylphenoxy polyethoxyethanol, octylphenoxy polyethoxyethanol, alkylarylpolyether alcohol, alkyl polyether alcohol, mixtures thereof, or the like.

Polymers used in in the PVC coating compositions were marketed by B.F. Goodrich as Geon, 138.

Other plasticizers useful in the preparation of the above-said PVC coating compositions are epoxidized soybean oil, organic trimellitates, such as trioctyl mellitate or organic citrates such as acetyl tributylcitrate, or mixtures thereof.

Other stabilizing agents effective for stabilizing the PVC resins include stearates, such as alkaline earth metal stearates, epoxidized soybean oil, secondary octyl tins and phosphites and organo barium and cadmium complexes, or mixtures thereof.

Preferred PVC coated compositions of the present invention comprise about 2.0% to 20.0% by weight of terbufos; about 70.0% to 93.0%, by weight of a biodegradable, cellulosic granular material having a pH value between pH 6 and pH 8 and a particle size which is about 90% by weight -8 +48 mesh and coated with about 5.0% to 10.0%, by weight, of a polyvinyl chloride dispersion resin homopolymer/copolymer coating composition having a weight average molecular weight of about 260,000 to 340,000 and an inherent viscosity ASTMD 1243 of about 1.13 to 1.26 and containing about 5.0% to 15.0%, by weight, of a plasticizing agent selected from butyl benzyl phthalate and diisononyl phthalate; about 0.3% to 2.0%, by weight, of calcium/zinc stearate, a heat stabilizing agent for the resin; about 0.5% to 2.0% of the nonionic surfactant, nonylphenoxy polyethoxyethanol.

The PVC or PVC/vinyl ester copolymer or homopolymer composition employed for coating or partially coating the terbufos cellulosic granular compositions may be prepared by mixing together about 12.5% to 50.0% by weight of the PVC resin or PVC/vinyl ester copolymer or homopolymer with about 0.3% to 5.0% by weight of a heat stabilizing agent; about 5.0% to 37.5% by weight of a plasticizing agent; and about 0.58% to 5% by weight of a surface active agent. This composition can then be sprayed onto the tumbling bed of particulate cellulosic, biodegradable, sorptive carrier containing from about 2.0% to 20.0% by weight of terbufos. When spraying is complete, the particulate composition is introduced into a dryer or drum furnace where it is heated to a temperature between about 120°C to 160°C in order to cure the PVC resin coating on the granules.

Advantageously, the granulated formulations of this invention are highly effective for controlling symphylids, white grubs, seed corn beetles, billbugs, thrips, corn flea beetles, nematodes, wireworms, rootmaggots, cutworms, greenbugs, corn leaf aphids, Diabrotica spp., Tetanops myopaeformis, Delia brassicae, millipedes, onion maggots, and the like and may be applied to the soil in several ways. They may be applied to the soil surface as a broadcast application, a band beside the rows of planted crops, or a ring around individual plants such as in the case of banana trees. The compositions may also be applied in furrow when planting crops such as corn or in admixture with crop seeds such as canola, i.e. oil seed rape.

A surprising advantage obtained when utilizing the formulations of this invention is the slow release of the terbufos which has been absorbed into the cellulosic granules. These cellulosic granular formulations do not permit rapid release or a burst of terbufos into the soil when said granular formulation is applied. Rather, these formulations provide a metered release of toxicant into the soil. This is especially important when the above-said pesticides are being employed for crop protection against insects and nematodes and said crops are being treated for weed control with an AHAS inhibiting herbicide such as a sulfonyl urea. Among the AHAS inhibiting herbicides, which have been reported to induce crop injury when used in conjunction with previously available terbufos compositions are primisulforon and nicrosulfuron. Surprisingly, it has now been found that the very metered release of terbufos from the granules of the formulations of the present invention limits the availability of the terbufos to the root systems of the treated plants and restricts the amount of pesticide that can be taken into the plant system. Thus, antagonism between the pesticide and the altered enzyme system in the plant, created by use of an AHAS inhibiting herbicide in the vicinity of said plant, is substantially eliminated and phytotoxicity in the crop essentially avoided.

In practice, it is found that the application of a sufficient quantity of the cellulosic granular composition of the invention, to provide about 0.25 kg/ha to 8.0 kg/ha, preferably about 0.25 kg/ha to 4.0 kg/ha of the insecticide-nematicide, to the soil in which plants are planted or growing, will protect said plants from attack by insects and nematodes. Moreover, it is found that such treatment will provide extended protection for the plants against insect and nematode attack.

In order to facilitate a further understanding of the invention, the following examples are presented primarily for the purpose of illustrating certain more specific details thereof. The invention is not to be deemed limited thereby except as defined in the claims.

### EXAMPLE 1

### 5% Terbufos cellulosic granular insecticide-nematicide composition having reduced mammalian dermal toxicity

A horizontal rotary blender is charged with 750 gm of inert 12/20 mesh granular biodegradable, cellulosic sorptive particles having a pH value of 7.15 and a bulk density of 38.5 lbs/cft. Said cellulosic granules are about 39.0% by weight of cellulose fiber, 58% by weight of kaolin and about 4% by weight of titanium dioxide and/or barium sulfate from the manufacture of paper. The particle size distribution of the cellulosic granules is as follows:

| **U.S. Sieve Size** | **% By Weight** |
|---|---|
| #8 | 0 |
| #10 | 0 |
| #12 | 0.97 |
| #16 | 79.04 |
| #20 | 17.39 |
| #30 | 1.74 |
| pan | 0.84 |

The blender is started and the tumbling mass of particulate material sprayed with 51 gm of technical grade terbufos (86.0% purity). Spraying is continued for twelve minutes and the sprayed mass blended for an additional ten minutes to assure even distribution of the terbufos throughout the particulate mass and excellent absorption into each particle. The composition thus prepared is then screened to assure a 12/20 mesh product having a minimal amount of fines and essentially no oversize. The bulk density of the finished product is 46.3 lbs/cft. The product is then stored in glass containers until the formulation is assayed for stability, attrition, mammalian toxicity and/or biologically evaluated.

To determine stability of the terbufos in the above-said particulate composition, said composition is placed in a glass storage vessel and stored at 45°C for two months. The initial terbufos assay indicates the presence of 5.48% terbufos in the composition. Two months after storage at 45°C the product is again assayed and found to contain 5.43% terbufos.

Resistance to attrition of the terbufos composition is found to be very high from the day of preparation and, surprisingly, improves during storage as can be seen below.

| **Resistance to Attrition (%)** | | | |
|---|---|---|---|
| **Initial** | **1 Month** | **2 Months** | **3 Months** |
| 98.0% | 98.8% | 99.2% | 99.6% |

The mammalian dermal toxicity of the thus prepared composition is determined on male rabbits and the Rabbit Dermal LD₅₀ is found to be 453 [326-627] mg/kg.

### EXAMPLE 2

### 5% Terbufos cellulosic granular insecticide-nematicide composition having reduced mammalian dermal toxicity

The procedure of Example 1 is repeated excepting that 10/14 mesh inert, biodegradable, cellulosic sorptive particles are substituted for the 12/20 mesh particles used in said example 1. The cellulosic granules are approximately 40% by weight cellulose fiber, 57% by weight of kaolin and 3% by weight of titanium dioxide and/or barium sulfate from the manufacture of paper. The particle size distribution of the cellulosic granules based on U. S. Sieve Size is as follows:

| **U.S. Sieve Size** | **% By Weight** |
|---|---|
| #8 | 0 |
| #8-10 | 4.97 |
| #10-14 | 67.44 |
| #14-16 | 18.16 |
| #16-50 | 9.43 |
| -30 | 0 |

The bulk density of these granules is 35.7 lbs/cft and they have a pH value of 7.7.

The blender is charged with 750 gm of the above-said cellulosic particles and sprayed with 53.43 gm of technical grade terbufos (88.0% purity) for twelve minutes. After spraying of the terbufos is complete, the sprayed particles are sprayed with 0.75 gm of Red Dye Sudan IV and then blended for an additional ten minute period.

The bulk density of the finished product is 39.2 lbs/cft and has a Rabbit Dermal of LD₅₀ of 343 [244-482] mg/kg.

The finished product comprises on a parts by weight basis 5.85% terbufos, 0.01% Red Dye Sudan IV and 94.14% cellulosic granules 10/14 mesh.

### EXAMPLE 3

### 5% Terbufos plus 5% soybean oil cellulosic granular insecticide-nematicide composition having reduced mammalian dermal toxicity

The procedure of Example 2 is repeated excepting that the 750 gm of 10/14 mesh cellulosic particles are sprayed with 57.04 gm of technical grade terbufos (88% purity), then with 50 gm of soybean oil and thereafter 0.75 gm of Red Dye Sudan IV. The sprayed particles are blended for an additional ten minutes and then placed in a clear glass bottle.

Determination of the dermal toxicity of the thus prepared composition indicates a Rabbit Dermal toxicity of 207 [167-258]mg/kg on male rabbits.

On a parts by weight basis the finished product is 5.85% terbufos, 0.01% Red Dye Sudan IV, 5.85% Soybean Oil and cellulosic granules 10/14 mesh 88.29%.

### EXAMPLE 4

### 10% Terbufos cellulosic granular insecticide-nematicide composition having reduced mammalian dermal toxicity

A horizontal rotary blender is charged with 750 gm of inert 8/20 mesh granular, biodegradable, cellulosic sorptive particles having a pH value of 7.15 and a bulk density of 38.5 lbs/cft. Said cellulosic granules are about 38% by weight of cellulose fiber, 58% by weight of kaolin and about 4% by weight of titanium dioxide and/or barium sulfate used in the manufacture of paper. The particle size distribution of the cellulosic granules is as follows:

| **U.S. Sieve Size** | **% By Weight** |
|---|---|
| #8 | 0.2 |
| #10 | 0.4 |
| #14 | 81.7 |
| #16 | 14.4 |
| #25 | 3.3 |
| pan | 0 |

The blender is started and the tumbling mass of particulate material sprayed with 100.0 gm of technical grade terbufos (86.0% purity). Spraying is continued for twelve minutes and the sprayed mass blended for an additional ten minutes to assure even distribution of the terbufos throughout the particulate mass and excellent absorption into each particle. The composition, thus prepared, is then screened to assure an 8/20 mesh product having a very minimal amount of fines and essentially no oversize. The product is stored in a glass bottle until analyzed and found to contain 10.2% terbufos. The Rabbit Dermal LD₅₀ for this product is 171 [122-214] mg/kg. It has a finished bulk density of 46.3 lbs/cft.

The finished product is 10.20% by weight terbufos and 89.80% by weight 8/20 mesh cellulosic granules.

### EXAMPLE 5

### 10% Terbufos cellulosic granular insecticide-nematicide composition having reduced mammalian dermal toxicity

The procedure of Example 4 is repeated excepting that 12/20 mesh cellulosic granular material is substituted for the 8/20 mesh material used in said Example 4. The finished product has a bulk density of 46.3 lbs/cft and a Rabbit Dermal LD₅₀ of 226 [163-314]-mg/kg. Addition of 2.0% by weight of linseed oil to the thus prepared product increases the mammalian dermal toxicity of the oil containing product giving it a Rabbit Dermal LD₅₀ 171 [122-214] mg/kg.

### EXAMPLE 6

### 15% Terbufos cellulosic granular insecticide-nematicide composition having reduced mammalian dermal toxicity

A horizontal rotary blender is charged with 85 parts by weight of 8/20 mesh granular, biodegradable, cellulosic sorptive particles having a bulk density of 38.5 lbs/cft and a pH value of 7.15. The blender is rotated and sprayed with 17.04 parts by weight of technical grade terbufos (88% purity). Spraying of the terbufos is conducted for twelve minutes and the sprayed mass is permitted to blend for fifteen minutes thereafter. The thus prepared product contains 15% by weight of terbufos and has a Rabbit Dermal LD₅₀ of 143 [73-276] mg/kg.

The above-described procedure is repeated excepting that 12/20 mesh cellulosic granules are substituted for the 8/20 mesh granules used in the above-said composition. The product contains 15% by weight of terbufos and has a Rabbit Dermal LD₅₀ of 135 [82-221] mg/kg.

### EXAMPLE 7

### Determination of Rabbit Dermal toxicities for all compositions described in Examples 1-13 above

In these tests, albino male rabbits of the New Zealand white strain and approximately 12 to 14 weeks of age are weighted and placed in individual cages equipped with an automatic watering device. The rabbits are fed ad libitum a non-medicated Purina Rabbit chow. Each animal is identified using a metal ear tag.

The test site is prepared on each animal by clipping the trunk free of hair with electric clippers and a number 40 blade approximately 24 hours prior to testing. The test material, as received, is spread on a plastic wrap, moistened with tap water, the rabbit is placed ventral surface down on the wrap with the test material and the plastic wrap secured to the animal with adhesive tape. The area is then covered with a filter cloth wrapping to protect the plastic from damage. The area of application encompasses approximately 10% of the body surface area. The test material is held occluded under the impervious plastic wrap in continuous 24 hour contact with the shaved skin. At the end of the 24 hour exposure period the wraps are removed and any remaining test material removed by wiping the test site the cloth wrap.

The treated animals are examined daily for toxic signs such as ataxia, salivation and prostration and death.

The toxic signs (if any) and death are recorded for each animal and the results of the observations recorded. The LD₅₀ calculations are then undertaken using the Weil Method.

Comparative Rabbit Dermal toxicity data, mg/kg for the compositions prepared in examples 1-6 above are reported in Tables I and II below, where it can be seen that terbufos compositions prepared on the new cellulosic granules have significantly improved LD₅₀'s compared to compositions prepared on carriers obtained for non-renewable natural resources.

**TABLE I**

| **Rabbit Dermal toxicity data: LD**_{**50**}**'s for 5% to 15% by weight of terbufos on a variety of granular carriers** | | | | |
|---|---|---|---|---|
| Compound % by weight terbufos | Granular Cellulosic carrier U.S. mesh size | Dermal LD₅₀ mg/kg | Granular Mineral carrier U.S. mesh size | Dermal LD₅₀ mg/kg |
| 5 % | 12/20 | 453[326-627] | 24/48 Eastern European Diaperl S-1 | 120[99-154] |
| 5 | 10/14 | 343[244-482] | 24/48 Mexican ROB | 49 |
| 5%+ 5% oil | 10/14 | 207[167-258] | | |
| 10% | 8/20 | 171[122-214] | 10/20 Costa Rican Pumice | 52 |
| 10% | 12/20 | 226[163-314] | 24/48 South African montmorillonite | 136[123-149] |
| 10% + 2% oil | 12/20 | 171[122-214] | | |
| 15% | 8/20 | 143[73-276] | 24/48 U.S. montmorillonite | 10.2 |
| 15% | 12/20 | 135[82-221] | | |

**TABLE II**

| **Rabbit Dermal toxicity data: LD**_{**50**}**'s for 15% to 20% by weight of phorate on a variety of granular carriers** | | | | |
|---|---|---|---|---|
| Compound % by weight terbufos | Granular Cellulosic carrier U.S. mesh size | Dermal LD₅₀ mg/kg | Granular Mineral carrier U.S. mesh size | Dermal LD₅₀ mg/kg |
| 15% | 24/48 | 260[161-420] | 24/48 sand | 28 |
| | | | 24/48 U.S. montmorillonite | 129 |
| 20% | 24/48 | 80[51-127] | 24/48 attapulgite | 37 |
| | | | 24/48 U.S. montmorillonite | 64 |

### EXAMPLE 8

### Preparation of Terbufos cellulosic granular insecticidenematicide composition partially coated with shellac and having a reduced mammalian dermal toxicity

A 400.0 gm sample of the terbufos composition prepared as described in Example 5 above is introduced into a bench top tumbler and the tumbler set in motion. A 1.36 kg can of white shellac (30.7% solids) is then well stirred and a 50 gm sample of the shellac taken from the can and sprayed on the surface of the tumbling mass of 10% terbufos. Since the shellac adheres to the surfaces of the spraying equipment on 23.88 gms of shellac is actually applied to the particles. Spraying is completed in about 3 minutes, but, the sprayed granules are permitted to tumble for an additional 20 minutes and until the particles have a shiny appearance. To assist drying the treated granules are permitted to tumble and subjected to blowing with a stream of air. The finished granules are only partially coated and contain about 1.8% by weight of shellac.

### EXAMPLE 9

### Preparation of Terbufos cellulosic granular insecticidenematicide composition partially coated with an acrylic polymer and having a reduced mammalian dermal toxicity

The procedure of example 15 is repeated excepting that an acrylic polymer marketed by Rohm Pharmaceutical Co. as Eudragit-E is used as the coating material. In this preparation 400.0 gm of the 10% terbufos granules prepared as in Example 5 are placed in a bench top tumbler and the tumbler bet in motion. This tumbling particles are then sprayed with 12.5 gm of the acrylic polymer Eudragit-E dispersed in 100 mL of acetone. Spraying is carried out over a 70 minute period and then tumbled for an additional 30 minutes with air being blown into the tumbler for the purpose of drying the particles. As the acrylic polymer adheres to equipment only 33.3 gm of the polymer is actually applied to the particles surfaces. This yields particles having 1.04% by weight of acrylic polymer as a partial coating.

### EXAMPLE 10

### Biological evaluation of Terbufos cellulosic granular insecticide-nematicide composition having reduced mammalian dermal toxicity

In these tests, banana trees are treated with a semi-circular application of the terbufos applied to the soil on cellulosic or pumice granules. The root systems are examined at 30 day intervals following application. Results obtained are as follows:
A biological evaluation of terbufos cellulosic granular insecticide-nematicide for the control of banana nematodes (Radopholus similis) indicate the formulation is effective in reducing these nematodes similar to the pumice formulation. Nematode counts obtained following June 26 applications in bananas ar as follows:

| Formulation | Carrier | Dosage (gm ai/mat) | No. of Radodophulus similis/100g roots | | |
|---|---|---|---|---|---|
| | | | July | Aug. | Sept. |
| Terbufos 15%G | (cellulose) | 3.0 | 11,000 | 8,917 | 7,417 |
| Terbufos 10% | (pumice) | 3.0 | 7,000 | 7,167 | 13,000 |

At 3 months after treatment, the cellulosic formulation is maintaining the Radopholus populations numerically below the economic threshold level of 10,000/100 g roots for an extended period compared to the pumice formulation. The nematode control for both treatments is reflected in the plant response in percent functional roots.

| Formulation | Carrier | (gm ai/mat) | Functional Roots (%) | | |
|---|---|---|---|---|---|
| | | | July | Aug. | Sept. |
| Terbufos 15%G | (cellulose) | 3.0 | 87.3 | 85.6 | 80.4 |
| Terbufos 10% | (pumice) | 3.0 | 85.5 | 85.9 | 80.0 |

The results indicate the cellulosic formulation of terbufos is equal to the pumice formulation which is recognized as highly effective in the control of nematodes present in banana plantations.

## Claims

1. A method for protecting crops from attack by insects and nematodes while inhibiting the growth of undesirable plant species in the presence of said crops and reducing or eliminating crop injury due to interaction in the plant between terbufos, the insecticidenematicide, and the AHAS inhibiting herbicide, comprising; applying to soil in the locus of said crops, at or about the time of planting, an insecticidally-nematicidally effective amount of a cellulosic granular composition at least 90% of which is -8 +20 mesh granules having a bulk density of from 561 kg/m³ (35 lbs/cft) to 722 kg/m³ (45,0 lbs/cft) and a pH value between pH6 and pH8 said cellulosic composition being selected from the group of cellulosic material derived from deinked paper, deinked recycled paper, waste sulfate pulp or primary sludge from paper manufacture, wood fiber, primary wood pulp, secondary wood pulp or sludge from wood processing and absorbed therein from 5.0% to 15% by weight of terbufos and thereafter applying to the locus of the above-said terbufos treated crops approximately 2 to 4 weeks after planting and after said crops have emerged, a herbicidally effective amount of an AHAS inhibiting herbicide.

2. A method according to Claim 1 wherein the AHAS inhibiting herbicide is primisulfuron or nicrosulfuron.

## Patentansprüche

1. Verfahren zum Schutz von Feldfrüchten vor einem Befall durch Insekten und Nematoden während das Wachstum von unerwünschten Pflanzenarten in Gegenwart dieser Feldfrüchte inhibiert wird und eine Feldfruchtschädigung aufgrund einer Wechselwirkung in der Pflanze des insektiziden-nematiziden Terbufos mit dem AHAS-inhibierenden Herbizid vermindert oder eliminiert wird, wobei das Verfahren eine Anwendung auf den Boden am Ort der Feldfrüchte zur Zeit oder etwa zur Zeit des Pflapzens einer insektizid-nematizid-wirksamen Menge einer körnigen Cellulosezusammensetzung, die zu mindesters 90% aus -8 +20 mesh-Körnern einer Schüttdichte von 561 kg/m³ (35 lbs/cft) bis 722 kg/cm³ (45,0 lbs/cft) und einem pH-Wert zwischen pH 6 und pH 8, wobei die Cellulosezusammensetzung ausgewählt ist aus der Gruppe von Cellulosematerial, das von entfärbtem Papier, entfärbtem Recyclingpapier, Abfall-Sulfatpulpe oder Primärschlamm aus der Papierherstellung, Holzfasern, primärer Holzpulpe, sekundärer Holzpulpe oder Schlamm aus der Holzverarbeitung, abgeleitet ist, und darin 5,0 Gew.-% bis 15 Gew.-% Terbufos absorbiert sind, umfaßt, sowie anschließend eine Anwendung am Ort der oben genannten mit Terbufos behandelten Feldfrüchte nach etwa 2 bis 4 Wochen nach dem Pflanzen und nachdem diese Feldflüchte emergiert sind, einer herbizid-wirksamen Menge eines AHAS-inhibierenden Herbizids.

2. Verfahren nach Anspruch 1, wobei das AHAS-inhibierende Herbizid Primisulfuron oder Nicrosulfuron ist.

## Revendications

1. Procédé de protection de cultures contre une attaque par des insectes et des nématodes, en empêchant la croissance des espèces végétales non souhaitables, en présence desdites cultures, et en réduisant ou en éliminant les dégâts aux cultures dus à une interaction dans la plante entre le terbufos, l'insecticide-nématicide, et l'herbicide inhibant l'AHAS, selon lequel on applique sur le sol à l'emplacement desdites cultures, au moment de la plantation ou à peu près, une quantité efficace de manière insecticide et nématicide d'une composition granulaire cellulosique dont au moins 90 % des granulés ont une taille de -8 à +20 meshs et une masse volumique apparente de 561 kg/m³ (35 lb/ft³) à 722 kg/kg/m³ (45,0 lb/ft³) et un pH de 6 à 8, ladite composition cellulosique étant choisie parmi une matière cellulosique dérivée de papier désencré, de papier recyclé et désencré, de pâte au sulfate résiduaire ou de boue primaire de l'industrie du papier, de fibres de bois, de pâte de bois primaire, de pâte de bois secondaire ou de boue provenant de traitement de bois, et de 5,0 % à 15 % de terbufos étant absorbé sur celle-ci, et on applique ensuite à l'emplacement desdites cultures traitées au terbufos mentionnées ci-dessus, environ 2 à 4 semaines après plantation et après levée desdites cultures, une quantité efficace de manière herbicide, d'un herbicide inhibant l'AHAS.

2. Procédé selon la revendication 1, dans lequel l'herbicide inhibant l'AHAS est le primisulfuron ou le nicrosulfuron.
